# EUROPEAN PATENT APPLICATION

(11) **EP 1 191 080 A2**
(43) Date of publication of application: **27.03.2002**
(21) Application number: 01120414.6
(22) Date of filing: 08.08.1997
(51) Int. Cl.: C09K 5/04

(54) **Alternative refrigerant including hexafluoropropylene**

(30) Priority: 08.08.1996 US 694279
(62) Divisional of application: 97938562.2
(71) Applicant: Turner, Donald E., Mobile, AL 36695 (US)
(72) Inventor: Turner, Donald E., Mobile, AL 36695 (US)
(74) Representative: Silverman, Warren

(57) **Abstract**

An alternative refrigerant to chlorofluorocarbons having the properties of being nontoxic, non-corrosive, nonflammable and safer to the environment including a blend of one or more of fluorocarbons known in the industry as R-1216 and R-22 and/or R-218 and one or more of the hydrocarbons identified as C1 through C6 on the carbon chain.

## Description

### Background of the Invention

Two of the most commonly used refrigerants for cooling (e.g., air conditioning) and refrigeration until recent years were R-12 and R-22. In January 1994, the further sale of R-12 (a chlorofluorocarbon) was banned rendering it unavailable for automotive use (its largest application). R-12 was also used with other refrigerants to achieve useful mixtures of other effective refrigerants. The refrigerant was known to exhibit good compatibility with oils utilized for lubrication of compressors in the refrigeration system and performed the important role of returning refrigerant back to the compressor. Another refrigerant facing restricted use which is for use with low temperature cooling applications such as freezers is R-502.

The chlorofluorocarbons in wide use as refrigerants, such as R-12, are known to have detrimental long term environmental effects and suitable alternatives have been vigorously sought since the realization of the detrimental effects. The accumulating evidence that the chlorofluorocarbons, because of their high stability, when released to the atmosphere, are able to reach the stratosphere has prompted substantial scientific study of the impact on the stratosphere. Evidence now supports the proposition that, under the influence of ultraviolet radiation, the chlorine atoms are released and undergo a chemical reaction with the ozone naturally occurring in the stratosphere. The observed effects of global warming is thought to be promoted by the thinning of the ozone layer occurring, at least in part, as a consequence of the chlorine-ozone reaction enabling greater amounts of ultraviolet light to reach the earth's surface.

The search for alternative refrigerants to harmful chlorofluorocarbons has been accelerated with the banning of the manufacture and sale in the United States of the refrigerant R-12, which was the refrigerant of choice for automotive and other portable commercial cooling systems. Alternatives such as the halocarbons, including fluorinated carbons, chlorinated carbons and brominated carbons are known and used as refrigerants. The most commonly used of the halocarbons are the fluorocarbons. The halocarbons have the desirable properties of being nonflammable and nontoxic.

Hydrocarbons, and particularly those of lower molecular weights (i.e., below about 70) have also been used as refrigerants. While being both effective and inexpensive, the hydrocarbon refrigerants are flammable which poses concerns when the refrigerant is leaked out of the system. When hydrocarbons are included as a constituent of a refrigerant, it is important for the refrigerant to exhibit azeotropic or near azeotropic properties such that any evaporation (loss) of the refrigerant experienced occurs in approximately the same rate as the other constituents. Only if the constituents exhibit this character, will the evaporated gas be nonflammable. Collaterally, it is important that during any experienced loss of refrigerant that the relative ratios of constituents not change appreciably, otherwise the thermodynamic properties of the refrigerant are likely to change causing the performance to deteriorate and perhaps damage the equipment.

R-22, a chlorodifluoromethane, is widely utilized in commercial refrigeration systems however, has the undesirable characteristic of requiring a low suction temperature in the compressor to avoid a rise in the discharge temperature. To overcome this characteristic, R-22 is commonly blended with smaller amounts of other refrigerants to produce a favorable vapor pressure/temperature curve. GB 2228739A describes compositions comprising refrigerant 22 with a hydrocarbon such as propane, propylene, n-butane, isobutane and mixtures thereof for use as an environmentally acceptable alternative refrigerant.

An environmentally friendly commercial replacement for refrigerant R-12 is R-134A however, while the refrigerant exhibits a substantially similar pressure/temperature curve as R-12, it requires substantial modification of the refrigerating/cooling systems before use of the replacement R-134A. Likewise, R-134A is not compatible with R-12. Automotive systems utilizing R-12 include a lubricant, which is insoluble in R134A, causing further incompatibility of the mixture. With the cessation of sale of R-12, recharging of the refrigerant in the automotive system with R-134A required an expensive retrofit to the system to accommodate the parameters of the replacement refrigerant and a complete purging of the system to ensure proper performance of the recharged system.

JP04288452 describes the use of hexafluoropropylene as an alternative to R-12 and R-22 as an environmentally acceptable coolant for refrigerators.

The quest for suitable substitutes for the harmful chlorofluorocarbons is complicated by the limited number of single fluorinated hydrocarbons which demonstrate the desirable refrigerant properties. Mixtures of known fluorinated hydrocarbons might be used if the desired combination of properties could be found in a given mixture. US4810403 describes a refrigerant containing three or more halocarbons, each halocarbon having a successively higher boiling point, for example, R-22, R-152a and R-114. WO97/11138 describes a combination of known refrigerants for use as an alternative to R-12 or R-500. A typical mixture includes isobutane, 1-chloro-1, 1-difluoroethane, 2-chloro-1,1,1, 2-tetrafluoethane and chloro difluoromethane. The creation of simple mixtures also generates problems for the design and operation of refrigeration systems in that the components may segregate in vapor and liquid phases. While concentration is accordingly directed to azeotropic blends or combinations, avoiding the segregation problems, the identification or formulation of such blends is not predictable, particularly when cost, flammability and toxicity are primary concerns.

### Summary of the Invention

The present invention is directed to a blend of fluorocarbons and hydrocarbons in an homogeneous manure which performs as a replacement refrigerant in systems designed for prior chlorofluorocarbons without retrofitting of the system, in a manner essentially according to the temperature/pressure curve of the replaced refrigerant.

The novel composition of the refrigerant of the present invention may be varied in the weight percentages of components to exhibit the various vapor pressure/temperature curves of other commercial refrigerants utilized in existing systems such that no retrofitting of the system is required.

While hydrocarbons are known to be flammable, the blend of particular hydrocarbons and/or certain fluorinated alkanes with particular selected halocarbons exhibits a near azeotropic character and the desirable nonflammability and nontoxicity with the added advantage of having a predictable and controllable vapor pressure/temperature curve such that it may be adjusted to parallel or closely approximate the pressure/temperature of a known, commercial refrigerant needing to be replaced.

The refrigerant ofthe present invention is particularly suitable for the replacement of R-12, R-22 and R-502, with a non-ozone depleting alternative yet being directly substitutable into such system without need for retrofitting since the refrigerant may be modified to exhibit similar operating parameters ofthe refrigerant to be replaced. Likewise, the alternative refrigerant of the present invention may be substituted for R-134A with similar operating similarity however, the lubricant utilized in that system must be replaced with a mineral based oil which in the alternative refrigerant provides excellent miscibility and lubrication of a system requiring such.

The refrigerant of the present invention provides a more universal refrigerant than those presently used in automotive and portable systems and is compatible with large commercial systems, being able to be modified, such as during installation into a system, in its blend of ingredients to match the vapor pressure/temperature of a variety of refrigerants, thereby eliminating the need to inventory several different refrigerants or modified formulations thereof.

These and other advantages and objects ofthe present invention will become evident from the following description of preferred and alternative embodiments.

### Brief Description of the Drawings

The present invention may be more fully understood with reference to the accompanying drawings in which:
FIG. 1 is a vapor pressure/temperature graph illustrating the performance of the invention in relation to R-12.
FIG. 2 is a vapor pressure/temperature graph illustrating the performance of an alternative embodiment of the invention in relation to R-134A.
FIG. 3 is a vapor pressure/temperature graph illustrating the performance of a further alternative embodiment of the invention in relation to R-12.
FIG. 4 is a vapor pressure/temperature graph illustrating the performance of a further alternative embodiment of the invention in relation to R-22.
FIG. 5 is a vapor pressure/temperature graph illustrating the performance of a further alternative embodiment of the invention in relation to R-22.

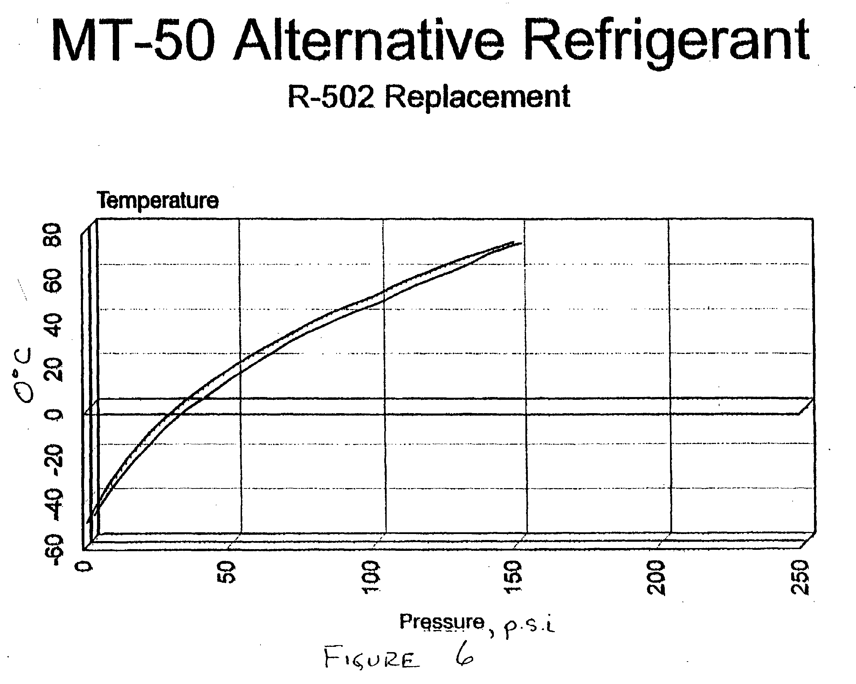

FIG. 6 is a vapor pressure/temperature graph illustrating the performance of a further alternative embodiment ofthe invention in relation to R-502.

### Description of Preferred Embodiments

With the elimination of refrigerant R-12 from the market because of its detrimental environmental characteristics, it was important to reexamine hydrocarbons as a refrigerant. It is well known that propane in pure form is a very efficient refrigerant, as is butane. Likewise, ammonia has seen wide use as a refrigerant. It is also well known that a refrigerant must be safe to handle, transport, install and operate in the cooling or refrigeration system. Leakage of a system must be anticipated making nonflammable and nontoxic characteristics important factors for a system operating in a closed space.

The development of the present invention is founded upon the principle of formulating a composition of fluorocarbons and preferably, hydrocarbons that have known thermodynamic properties and adjusting the ratios of constituents to achieve performance characteristics comparable to selected refrigerants which, in the preferred embodiments, are R-12, R-134A, R-22 and R-502. The preferred component compositions are hexafluoropropylene (R-1216), chlorodifluoromethane (R-22) and additive amounts of one or more of low molecular weight hydrocarbons known as C1 through C6 (i.e., methane, ethane, propane, butane, isobutane, hexane and ethylene). Hexafluoropropylene is present in weight percent preferably from about 70 % to about 95 %. Chlorodifluoromethane is present in weight percent preferably from about 5 % to about 25 %. The hydrocarbon is present in weight percent preferably from about 1 % to about 10 %. It has also been discovered that certain fluorinated alkanes such as octafluoropropane and decafluorobutane, though very expensive refrigerants, may be advantageously included with hexafluoropropylene.

The composition of the present invention of essentially R-1216, R-22 and C1 to C6 hydrocarbons provides some very important attributes in addition to the extremely efficient thermodynamic properties. While all the low molecular weight hydrocarbons have extremely good thermodynamic characteristics and can be used in the present invention to produce the desired vapor pressure/temperature curve to closely match the refrigerant to be substituted for, propane is a preferred component when hydrocarbons are to be combined. Any single hydrocarbon in the C1-C6 chain can be used to produce the desired vapor pressure/temperature curve when blended with R-1216 and R-22 however, propane (R-290) is preferred because it is readily available and inexpensive in comparison, and using a single component makes the manufacturing process less costly and provides a desired end product being extremely efficient, nontoxic, nonflammable, environmentally friendly and a safe alternative to R-12, R-134A, R-22 and R-502.

As is known, R-290 is a flammable hydrocarbon refrigerant that facilitates the lubrication in the system to flow freely to the compressor. It is necessary that the compressor lubrication complete the refrigeration cycle and return to the compressor as quickly as possible to preclude it from failing for lack of lubrication. R-290 greatly aids the lubricant to remain fluid during the refrigeration cycle. Because R-290 is a flammable hydrocarbon, nonflammable components that suppress the flammability are added to the blend of refrigerants. The addition of R-22 serves that purpose. Being known as a superior flame suppressant, it is used frequently in aircraft fire extinguishers. The boiling points of R-22 and R-290 are sufficiently close over the selected temperature range that they are jointly in the liquid or vapor phase over their operating range in the present composition. R-1216 is likewise nonflammable and is the major constituent of the present invention, being selected because of its similarly good thermodynamic properties, environmental friendliness and overall safety as a material. Collectively, the constituents provide a near azeotropic refrigerant.

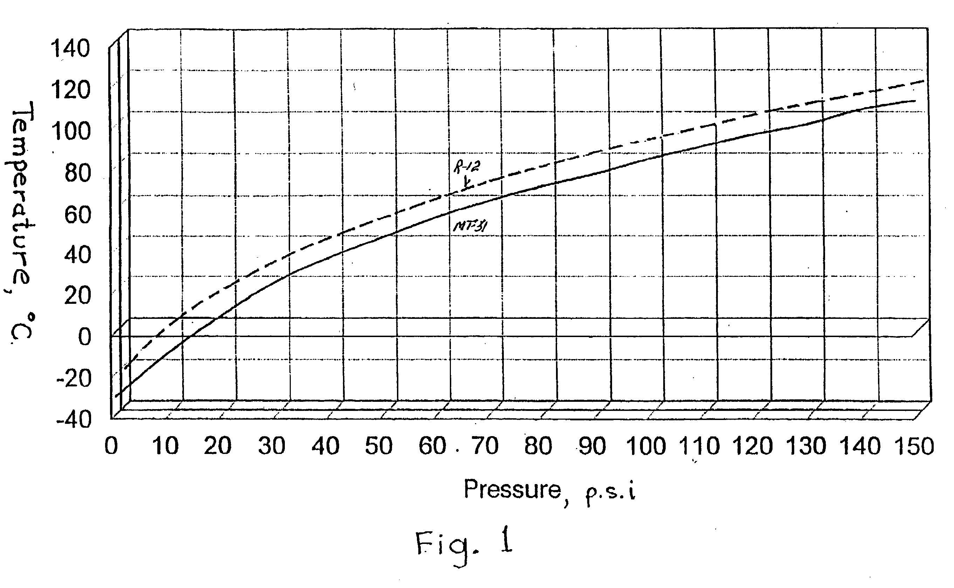

One of the formulations of the alternative refrigerant of the present invention that exhibits the thermodynamic properties of R-12 is composed of from about 80 % to about 95 % hexafluoropropylene; from about 4 % to about 10 % chlorodifluoromethane and from about 1 % to about 10 % propane. Figure 1 illustrates the pressure/temperature curve of this refrigerant (identified as MT-31) with the solid line. It will be noted upon examining the curve that the profile extends from -30° C. to about 100° C at pressures ranging from about 0 pounds per square inch to about 150 pounds per square inch Further examination of the Figure discloses that the MT-31 pressure/temperature profile closely parallels that for R-12, as indicated with the dotted line on the Figure. The blend of ingredients for the refrigerant whose pressure/temperature curve is illustrated was about 90 % by weight of R-1216, about 6 % by weight of R-22 and about 4 % by weight of R-290.

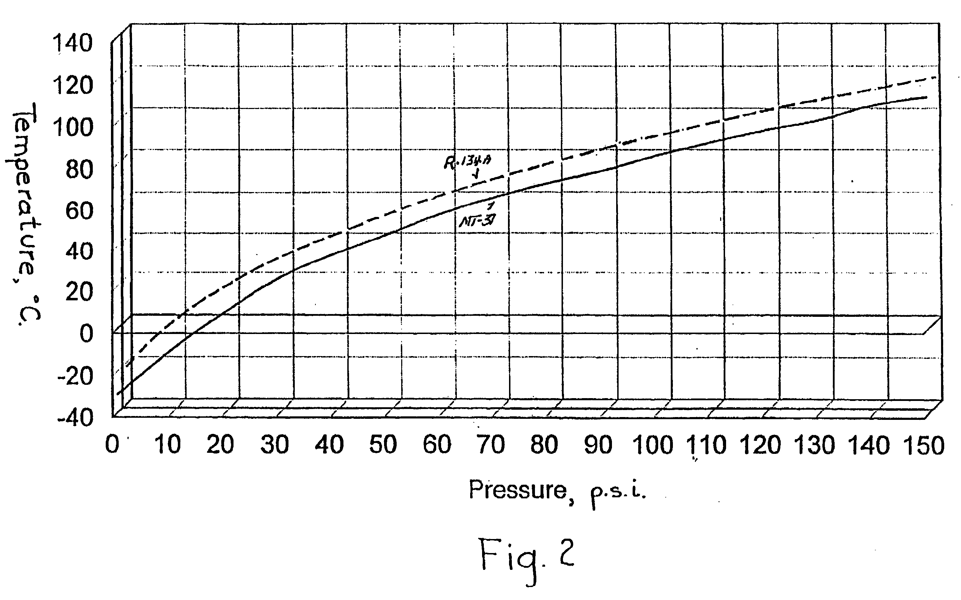

Referring now to Figure 2, it will be seen that as with the R-12 profile of Figure 1, the pressure/temperature profile for the alternative refrigerant of the present invention closely parallels with that of R-134A, indicated by the dashed line on Figure 2 over the same general ranges as Figure 1. It should be noted that the vapor pressure/temperature curves for R-12 and R-134A are essentially identical. The blend of ingredients for the refrigerant whose pressure/temperature curve is illustrated was about 90 % by weight of R-1216, about 8 % by weight of R-22 and about 2 % by weight of R-290. It should be noted that the MT-31 alternative refrigerant vapor pressure/temperature curve illustrated in Figure is unperceptibilly changed from that in Figure 2, although the percentages by weight of R-22 and R-290 have been varied substantially, illustrating the stability of the MT-31 refrigerant curve to variations of these magnitudes.

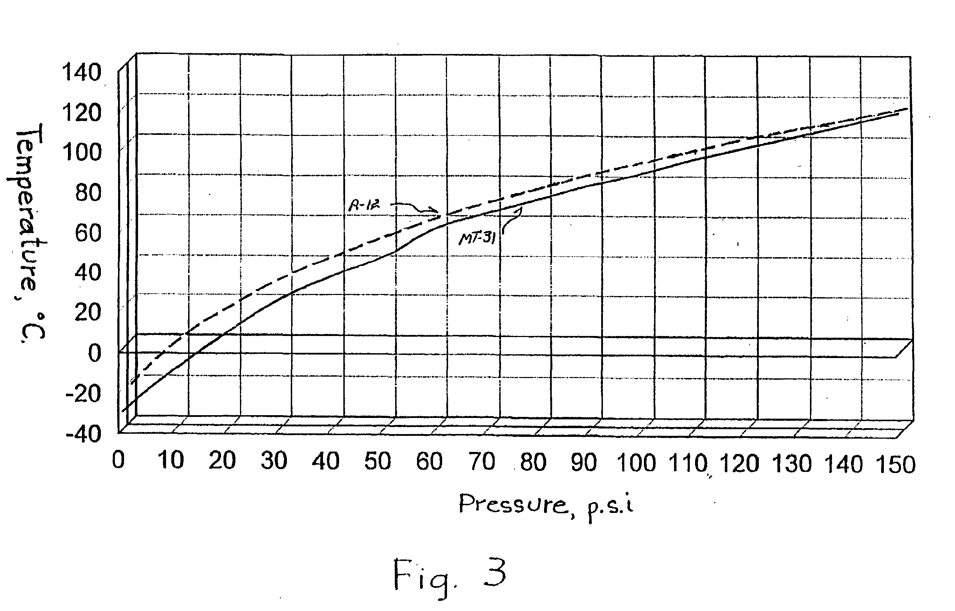

Referring now to Figure 3, a further embodiment of the MT-31 alternative refrigerant is compared to R-12, by the inclusion of the vapor pressure/temperature curve for a blend of components of about 85 % by weight of R-1216, about 8 % by weight of R-22 and about 7 % by weight of R-290. It should be appreciated that even with the slight changes of the curves in the upper half of the range, the curves in the lower one-half of the range are essentially unchanged. This blend further illustrates the ability to controllably adjust the upper portion of the curve to match a desired refrigerant property.

Alternative embodiments of the invention, illustrating the use of other of the C1-C6 hydrocarbons in a blend to replace R-12 and R-134A are: a blend of about 92 % by weight of R-1216, about 2 % by weight of R-22 and about 6 % by weight of iso-butane and a blend of about 87 % by weight of R-1216, about 5 % by weight of R-22, about 3 % by weight of ethane, about 1 % by weight of hexane and about 4 % by weight of methane. These alternative embodiments exhibit vapor pressure/temperature curves very similar to the curves of M-31 on Figure 1.

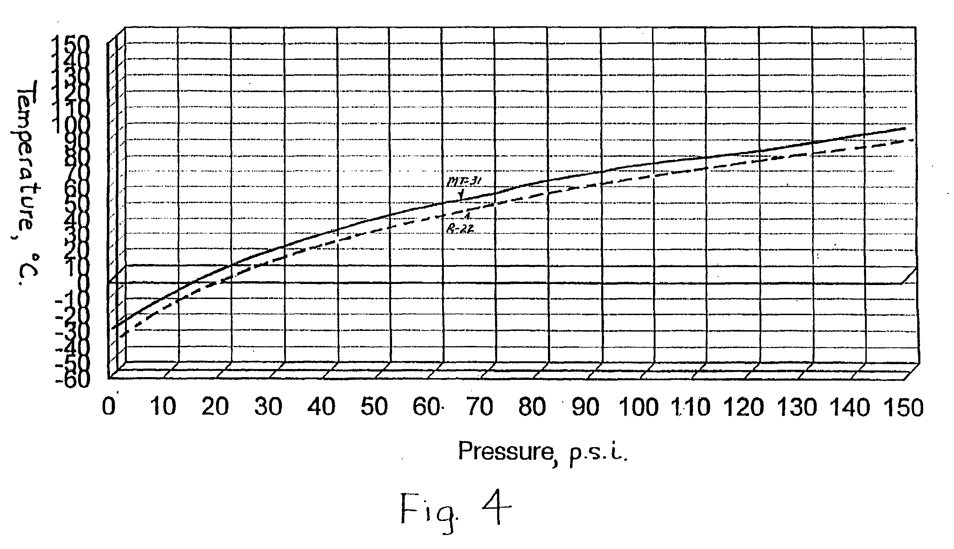

Referring now to Figure 4 illustrates the pressure temperature curve for the MT-31 alternative refrigerant, wherein the ratios of constituents are blended such that the thermodynamic properties of the refrigerant approximate those of the refrigerant R-22. The composition of MT-31 for the substitution for R-22 is composed of about 73 % hexafluoropropylene (R-1216; about 23 % chlorodifluoromethane (R-22) and about 4 % propane (R-290). Figure 4 illustrates the pressure/temperature curve of this refrigerant identified as with the solid line and R-22 as a dashed line. It will be noted upon examining the curve that the profile extends from about -30° C. to about 100° C at pressures ranging from about 0 pounds per square inch to about 150 pounds per square inch. Further examination of the Figure 4 discloses that the MT-31 pressure/temperature profile closely parallels that for R-22.

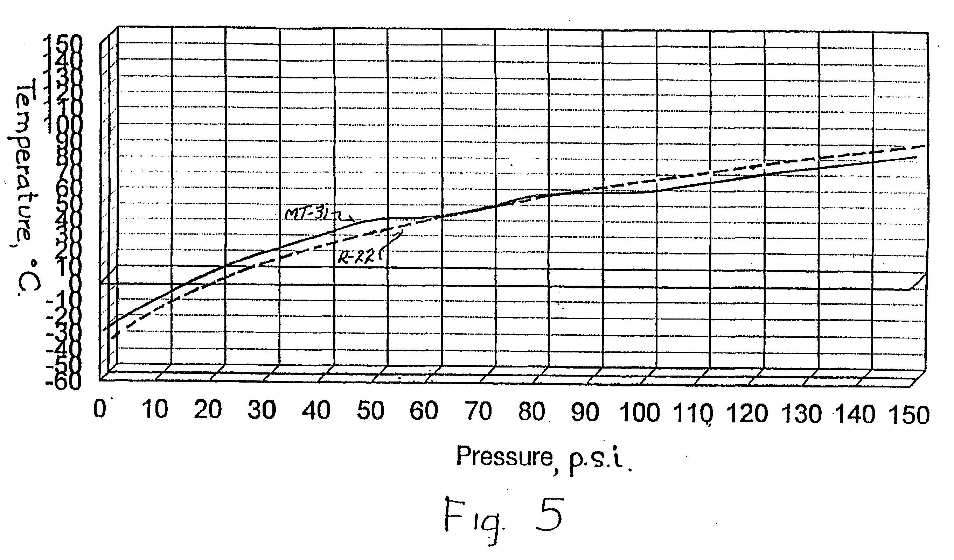

Figure 5 illustrates the vapor pressure/temperature curve for the MT-31 alternative refrigerant embodiment further adjusted in its composition demonstrating the control over the upper one-half of the curve in order to "fine tune" the curve to closely approximate the vapor pressure/temperature curve of a refrigerant to be substituted for. By increasing the weight percent of R-1216 to about 80 % by weight, decreasing the R-22 to about 18 % and reducing the R-290 to about 2 % by weight, the upper end of the curve is modified such that it illustrates a generally lesser increase in pressure with a continuing increase in temperature where the variation of the vapor pressure/temperature curve of the composition of Figure 2 shows a general increase in pressure as temperature increases however, the knee of both curves occurs at the same approximate point.

Alternative embodiments of the invention, illustrating the use of other of the C1-C6 hydrocarbons in a blend to replace R-22 are: a blend of about 90 % by weight of R-1216, about 4 % by weight of R-22, about 2 % by weight of butane and about 4 % by weight of iso-butane; and a blend of about 84 % by weight of R-1216, about 10 % by weight of R-22, about 4 % by weight of butane and about 2 % by weight of iso-butane. These alternative embodiments exhibit vapor pressure/temperature curves very similar to the curves of M-31 on Figure 4.

It is this recognized capability to adjust the upper portions of the vapor pressure/temperature curves of the alternative refrigerant of the present invention which allows for the matching of its vapor pressure/temperature curve to that of a selected refrigerant which may exhibit lesser favorable properties such as flammability, toxicity and corrosiveness.

The stability of the nonflammability of the alternative refrigerant of the present invention was examined by gradually venting off 60 % (weight percent) of the composition from a system. During the venting, with the system temperature maintained at about 25 ° C., the vapor pressure of the blend of components varied less than 7 % from the initial value. This verified the stability of the refrigerant as nonflammable during the venting since the ratios of components (by weight percent) were essentially constant. The characteristic of nonflammability of the present invention is thought to be due to the close match of boiling point of R-22 and R-290, both included in substantially lesser amounts than the R-1216, but in approximately equal quantities to each other such that they remain in a generally constant ration (in a particular embodiment blend) if evaporated off due to a leak. Likewise, since they are minority constituents of the particular blend embodiment, the vapor pressure/temperature curve of the embodiment varies only slightly as their concentration varies (diminishes) from that of R-1216, which remains generally unchanged. This characteristic also assures that the thermodynamic performance (including efficiency) remains relatively constant during evaporation of the refrigerant. These characteristics indicate that the alternative refrigerant of the present invention is a safe and efficacious replacement for the R-12, R-134A, R-22 and R-502 systems having to be recharged with an alternative to the original refrigerant.

Additional advantages of the present invention were discovered under the testing of the use of the refrigerant in a system. It is well recognized in the field of refrigeration that the temperature of the suction (low side) and the discharge (high side) of the refrigeration compressor is critical to the efficiency (capacity) of the system. The refrigerant of the present invention, when charged into a system designated to use any of R-12, R-134A, R-22 and R-502 reduces the suction (low side) temperature of the compressor 10 % or more and reduces the discharge (high side) 15 % or more. Those familiar with the principles of refrigeration will recognize that the reduction of suction and discharge temperatures reflects the greater compressibility of the refrigerant of the present invention. Reduction of these temperatures illustrates the lesser amount of energy necessary to operate the cooling cycle and the gain in efficiency/capacity. Therefore, not only is a refrigerant provided that is ultimately less toxic and degrading to the environment, but also provides improved operating parameters for the system.

As is recognized, the above described alternative refrigerants to R-12 and R-22 include hexafluoropropylene (R-1216) as the primary component. As described above, R-22 is added to the hexafluoropropylene to improve the exhibited thermodynamic capacity of the refrigerant and to cause its temperature/pressure curve to closely match those of R-12 and R-22, such that the alternative refrigerant will perform in the selected system in a manner consistent to the refrigerant replaced. Likewise, a hydrocarbon is incorporated to aid in the improvement of the overall thermodynamic performance. Both the R-22 (chlorodifluoromethane) and the hydrocarbon have drawbacks to long term refrigerant usage. R-22 is not as environmentally friendly as numerous other refrigerants available and is scheduled for a ban in 2010 by the U. S. Environmental Protection Agency. At that time, all compounds incorporating any amount of the component will have to be withdrawn from the market. As related above, hydrocarbons are known flammable substances. While in the present usages they are incorporated in small percentages and form a near aziotropic compound so as to be considered a non-flammable mixture, some users prefer hydrocarbon free refrigerants.

An alternative embodiment to the above described hexafluoropropylene based refrigerant exhibiting similar thermodynamic properties as R-12, R-22 and R-502. In order to reduce or eliminate the environmentally less desirable R-22 constituent of the alternative refrigerant of the present invention, a fluorinated alkane may be included. The fluorinated alkane, preferably octafluoropropane or decafluorobutane, may be substituted in approximately the same ratio as the chlorodifluoromethane in the refrigerant, namely in a range of from about 5 % to about 25 %, or in blends therewith. It is recognized that fluorinated alkanes are presently extremely expensive refrigerants so most users desire to use as little of the alkane as is necessary to provide the thermodynamic properties desired. In the present invention, both the fluorinated alkane and the chlorodifluoromethane improve the thermodynamic properties of the hexafluoropropylene in approximately the same ratio. If the total substitution of an alkane for R-22 is desired, it may be appropriate to increase the range of fluorinated alkane to about 30 % or more. If a minor amount of hydrocarbon is included as in the above examples, the beneficial thermodynamic properties of the hydrocarbon will enable its being substituted for some of the fluorinated alkane, as from about 1 % to about 10 % by weight of the refrigerant, however normally in the 1 to 2 % range. Examples of the hexafluoropropylene based alternative refrigerant showing variations in the amount of the R-22 component by inclusion of a fluorinated alkane, with and without hydrocarbon are as follows:

| R-12 Substitute | | | | | |
|---|---|---|---|---|---|
| Hexafluoropropylene | 80 | 75 | 90 | 92 | 85 |
| Chlorodifluoromethane | 18 | 10 | | | 5 |
| Decafluorobutane | | | | | |
| Octafluoropropane | | 15 | 10 | 5 | 5 |
| hydrocarbon | | 2 | | 3 | 5 |

| R-22 Substitute | | | | | |
|---|---|---|---|---|---|
| Hexafluoropropylene | 40 | 60 | 50 | 70 | 55 |
| Chlorodifluoromethane | 40 | 10 | | 25 | |
| Decafluorobutane | | 10 | 10 | | |
| Octafluoropropane | 15 | 20 | 40 | 3 | 40 |
| hydrocarbon | 5 | | | 2 | 5 |

In those applications of refrigerants requiring a low temperature such as high demand freezers, quick chillers, out-of-doors or over the road operations as in trucking or rail, the thermodynamic properties of the alternative refrigerant of the present invention may be modified to match those of R-502, the commercial standard for such applications. In the present invention, the amount of the R-22 component is increased to be in the range of about 40 % to about 70 % by weight, and the hexafluoropropylene is decreased to about 30 % to about 60 % by weight, with the specific amounts being adjusted slightly to accommodate about 1 % to about 10 % (preferably about 2 %) of the hydrocarbon. In a preferred composition providing a temperature pressure curve approximating R-502, the composition consists essentially of hexafluoropropylene of about 38 %, chlorodifluoromethane of about 60 % and hydrocarbon of about 2 %, all by weight. As with the alternative refrigerants described above, hexafluoropropylene and a fluorinated alkane such as decafluorobutane and octafluoropropane are combinable and provide remarkable performance and compatibility as a replacement for R-502 low temperature applications. In general the alternative embodiment of the invention for use in replacement of R-502 and including the fluorinated alkane include hexafluoropropylene in the range from about 40 % to 70 % b weight and the fluorinated alkane in the range of about 60 % to 30 % by weight. Hydrocarbons may be included with the fluorinated alkanes, being in the range of 0 to 10 % included in the range of the fluorinated alkane. The chart below illustrates several alternative ratios of the components providing this performance, showing the versatility of the invention as a refrigerant. As with the compositions described above, blending of R-22 and hydrocarbons contribute to enhancement of the thermodynamic properties of the refrigerant and reduction of cost with the known disadvantageous properties of less favorable character environmentally and flammability, respectively.

| R-502 Substitute | | | | | |
|---|---|---|---|---|---|
| Hexafluoropropylene | 38 | 58 | 60 | 60 | 50 |
| Chlorodifluoromethane | 60 | 30 | | | |
| Decafluorobutane | | | | | 10 |
| Octafluoropropane | | 10 | 30 | | 40 |
| hydrocarbon | 2 | 2 | 10 | 40 | |

Likewise, it is well known in the refrigeration art that the discharge pressure of the refrigerant into the coils impacts the temperature of the refrigerant entering the condenser. Excessive temperature must be reduced which manifests a greater portion of the coils of the condenser for reduction of the temperature and lesser portions for the desired system cooling thereby dramatically lowering both the efficiency and the capacity of the system. Reduction of the high side refrigerant temperature reduces the amount of condenser dedicated to cooling the refrigerant and allowing more of the condenser to impact the cooling of the media (air in an air conditioner). The disclosed alternative refrigerants improve performance of the same systems when charged with R-12, R-134A, -22 and R-502.

## Claims

1. A non-inflammable refrigerant composition for use in substitution of a chlorofluorocarbon refrigerant and whose vapor pressure/temperature curve may be varied by adjusting the mixture of the ingredients thereof to approximate the vapor pressure/temperature curve of at least one chlorofluorocarbon, consisting essentially of:
i) one or more hydrocarbons selected from the group consisting of methane, ethane, propane, butane, iso-butane, hexane and ethylene in an amount from 1% to 10% by weight;
ii) a fluorinated alkane in an amount from 5% to 65% by weight; and
iii) the balance of hexafluoropropylene.

2. A non-inflammable refrigerant composition for use as a substitute for the refrigerant R-502 and which consists essentially of:
i) hexafluoropropylene in an amount from 30% to 60% by weight;
ii) a fluorinated alkane in an amount from 10% to 60% by weight;
iii) a hydrocarbon in an amount from 0% to 10% by weight.

3. The non-inflammable refrigerant composition according to Claim 2 wherein the composition additionally includes chlorodifluoromethane in an amount from 30% to 60%.

4. The non-inflammable refrigerant composition for use as a substitute for the refrigerant R-12 or R-134A and consisting essentially of:
i) hexafluoropropylene in an amount from 75% to 95% by weight;
ii) a fluorinated alkane in an amount from 5% to 25% by weight;
iii) a hydrocarbon in an amount from 0% to 10% by weight,
or as a substitute for the refrigerant R-22 and consisting essentially of:
i) hexafluoropropylene in a n amount from 40% to 75% by weight;
ii) a fluorinated alkane in an mount from 5% to 60% by weight;
iii) a hydrocarbon in an mount from 0% to 10% by weight.

5. The non-inflammable refrigerant composition according to any one of claims 1 to 4, wherein the fluorinated alkane is selected from decafluorobutane and octafluoropropane.
